# EUROPEAN PATENT SPECIFICATION

(11) **EP 2 075 481 B1**
(45) Date of publication and mention of the grant of the patent: **09.04.2014**
(21) Application number: 08022383.7
(22) Date of filing: 23.12.2008
(51) Int. Cl.: F16D 43/14, F16D 43/18

(54) **Centrifugal clutch**
Zentrifugalkupplung
Embrayage centrifuge

(30) Priority: 28.12.2007 JP 2007341395
(43) Date of publication of application: 01.07.2009
(73) Proprietor: Yamaha Hatsudoki Kabushiki Kaisha, Iwata-shi, Shizuoka 438-8501 (JP)
(72) Inventor: Okamura, Shigehiro, Iwata-shi Shizuoka-ken 438-8501 (JP)
(74) Representative: Grünecker, Kinkeldey, Stockmair & Schwanhäusser

(56) References cited:
- EP-A1- 1 378 678
- EP-A1- 1 780 436
- EP-A2- 0 714 801
- BE-A- 332 926
- JP-A- 1 182 651
- JP-A- 63 023 034

## Description

The present invention relates to a centrifugal clutch according to the preamble of independent claim 1. Such a centrifugal clutch can be taken from the prior art document JP 1-182651. Said document relates to a variable internal movement flywheel, wherein said flywheel is composed of a main flywheel and a sub-flywheel, wherein rocking weights are arranged to rotate around a pin. Said rocking weights are provided with a center of gravity and the distance between the center of a central shaft and the center of gravity is equal to the respective distance of the center of the central shaft to the center of the pin. In a modified embodiment, the respective distance of the center of the central shaft to the center of gravity is shorter than the distance of the center of the central shaft to the center of the pin. Moreover, the rocking weights are provided with a friction plate which provides friction contact with an inner surface of the main flywheel.

In JP 2007-120601 A, there is a conventionally centrifugal clutch disclosed with a clutch inner provided so as to be rotatable around a central shaft and a clutch outer surrounding the clutch inner. The clutch inner of the centrifugal clutch generally includes a clutch weight. The clutch weight is supported so as to be movable to the clutch outer side by a weight supporting shaft located on a position separating from the central shaft.

In the centrifugal clutch, the clutch weight moves to the clutch outer side, and is pressed against the internal circumferential surface of the clutch outer to transmit torque (hereinafter, referred to as clutch-transmission torque) to the clutch outer from the clutch inner. When a clutch is in a half-clutch state, that is, the clutch weight relatively rotates while sliding to the clutch outer, the clutch-transmission torque is proportional to force (hereinafter, referred to as clutch connection force) pressing the clutch weight against the internal circumferential surface of the clutch outer.

However, since the large fluctuation in the clutch connection force is caused by fluctuation in rotating speed of the clutch inner in the conventional centrifugal clutch, the clutch-transmission torque also fluctuates, which may impair the ride quality of a vehicle.

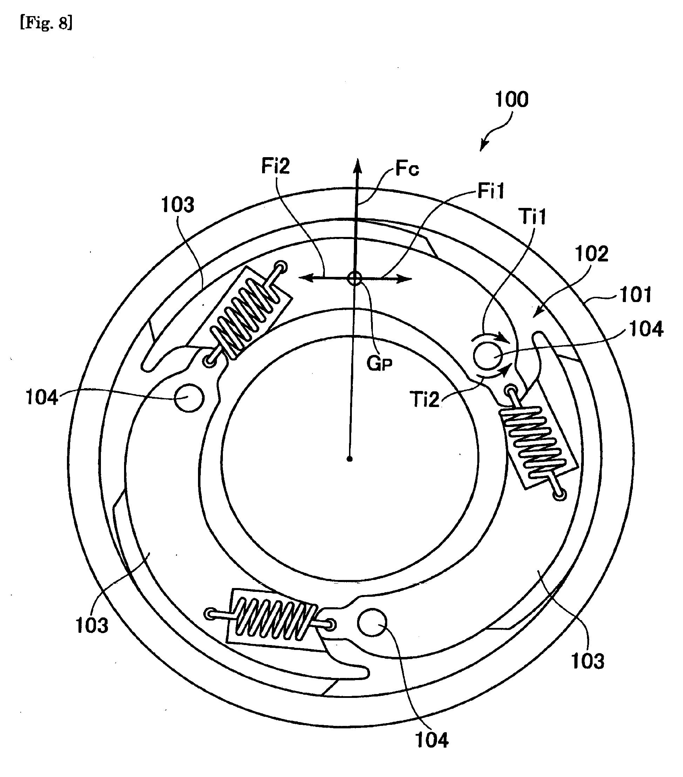

Fig. 8 is a diagram for explaining force applied to the clutch weight of the conventional centrifugal clutch. A centrifugal clutch 100 includes a clutch outer 101 and a clutch inner 102. The clutch inner 102 is provided with three clutch weights 103 and weight supporting shafts 104 supporting the clutch weights 103. In Fig. 8, the centroid of the clutch weights 103 are located on a position shown by Gp. In this description, the clutch inner 102 rotates, and centrifugal force Fc acts on the clutch weights 103.

When the rotating speed of the clutch inner 102 fluctuates, not only the centrifugal force Fc increases or decreases, but also inertial force Fi1 or Fi2 acts on the clutch weight 103. When the rotating speed of the clutch inner 102 rises, the centrifugal force Fc increases, and torque Ti1 centering on the weight supporting shaft 104 is generated by the inertial force Fi1. The torque Ti1 also acts as force pressing the clutch weight 103 against the clutch outer 101. On the contrary, when the rotating speed of the clutch inner 102 is decelerated, the centrifugal force Fc is reduced, and in addition, torque Ti2 is generated centering on the weight supporting shaft 104 by the inertial force Fi2. The torque Ti2 acts as force separating the clutch weight 103 from the clutch outer 101. Therefore, when the rotating speed of the clutch inner 102 fluctuates, the clutch connection force largely fluctuates, and thereby the clutch-transmission torque also fluctuates. In general, the rotating speed of the clutch inner fluctuates according to engine stroke (intake stroke and combustion stroke or the like) or the like. The fluctuation in the clutch-transmission torque may be felt as the vibration of a vehicle. The present invention has been made in view of the above problems.

Prior art document EP 1 378 678 A refers to a centrifugal clutch with clutch weights being swingable around the fulcrum of inclination. The distance from the fulcrum of inclination to the center of gravity thereof can be set to be larger than that of a conventional clutch weight composed of a single material.

Prior art document JP 63-023034 A relates to a centrifugal clutch device having weights of cast iron of thick specific gravity and being molded into leading sides of clutch shoes by aluminium die casting. The composition of the weights is movable around pins.

It is an objective of the present invention to provide a centrifugal clutch capable of suppressing the fluctuation in the clutch-transmission torque caused by the fluctuation in the rotating speed of the clutch inner.

According to the present invention said object is solved by a centrifugal clutch having the features of independent claim 1. Preferred embodiments are laid down in the dependent claims.

Accordingly, it is provided a centrifugal clutch comprising: a clutch inner being rotatable around a central shaft of the centrifugal clutch; and a clutch outer being relatively rotatable to the clutch inner on an outer side of the clutch inner, the clutch inner comprising: a weight supporting shaft; and a clutch weight supported by the weight supporting shaft and configured to move towards the clutch outer under influence of a centrifugal force, wherein a centroid position of the clutch weight is located at an intersection point of a straight line, which passes through the central shaft and the centroid position in radial direction of the centrifugal clutch, and a perpendicular line, which is perpendicular to the straight line and passes through the weight supporting shaft, or is located between the intersection point and the central shaft.

The centrifugal clutch can suppress the fluctuation in the clutch-transmission torque caused by the fluctuation in the rotating speed of the clutch inner. That is, when the centroid position of the clutch weight is located at the intersection point, the weight supporting shaft is located on the action line (the straight line of the direction of the inertial force passing through the centroid) of the inertial force (in the example of Fig. 8, the inertial force Fi1 or Fi2) caused by the fluctuation in the rotating speed of the clutch inner. Therefore, even when the rotating speed of the clutch inner rises or declines, the torque (in the example of Fig. 8, the torque Ti1 or Ti2) centering on the weight supporting shaft is not generated. Accordingly, the fluctuation in the clutch connection force caused by the fluctuation in the rotating speed of the clutch inner is suppressed, and as a result, the fluctuation in the clutch-transmission torque is suppressed.

When the centroid position of the clutch weight is located on further the central shaft side than the intersection point and the rotating speed of the clutch inner rises, centrifugal force applied to the clutch weight increases. On the other hand, the torque centering on the weight supporting shaft acts as force separating the clutch weight from the clutch outer. That is, torque of reverse direction to that of the torque Ti1 shown in Fig. 8 is generated. Thereby, the increase in the clutch connection force caused by the rise of the rotating speed can be suppressed. On the contrary, when the rotating speed of the clutch inner declines, the centrifugal force is reduced. On the other hand, the torque centering on the weight supporting shaft acts as force pressing the clutch outer against the clutch weight. As a result, the reduction of the clutch connection force caused by the declination of the rotating speed can be suppressed. As a result, the fluctuation in the clutch-transmission torque caused by the fluctuation in the rotating speed of the clutch inner is suppressed.

Preferably, a centroid displacement part is configured to displace the centroid position of the clutch weight towards the central shaft.

Further, preferably the centroid displacement part is connected to the clutch weight.

Still further, preferably the centroid displacement part is formed of a material different from that that of the clutch weight.

Yet further still, preferably the centroid displacement part is formed of a material having a specific gravity larger than that of the clutch weight.

Preferably, a distance between the central shaft and the centroid displacement part is shorter than a distance between the central shaft and the weight supporting shaft.

Further, the clutch weight comprises a weight main body and, preferably, an extension part extending therefrom towards the central shaft.

A length of the weight main body in radial direction of the centrifugal clutch is longer than a width of the weight main body in circumferential direction of the centrifugal clutch.

Yet further still, preferably the centroid displacement part is connected to the extension part and is, preferably, fitted into a hole formed in the extension part.

Preferably, the centroid displacement part is provided on an external circumferential side of the clutch weight and, preferably, is formed of a material having a specific gravity lower than that of the clutch weight.

Further, preferably a recessed part and/or a hole is formed in an outer area of the clutch weight.

There is further disclosed an engine unit comprising a centrifugal clutch according to one of the above embodiments.

Further, there is disclosed a vehicle, in particular a straddle-type vehicle, comprising an engine unit according to the above embodiment.

In the following, the present invention is explained in greater detail by means of embodiments thereof in conjunction with the accompanying drawings, wherein:
- Fig. 1: is a side view of a motorcycle provided with a centrifugal clutch according to an embodiment;
- Fig. 2: is a partial sectional view of an engine unit along line II-II shown in Fig. 1;
- Fig. 3: is an enlarged view of Fig. 2;
- Fig. 4: is a front view of the centrifugal clutch;
- Fig. 5: is a front view of a clutch weight with which the centrifugal clutch is provided;
- Fig. 6: is a diagram for explaining force applied to the clutch weight;
- Fig. 7: is a diagram for explaining force applied to a clutch weight according to another embodiment; and
- Fig. 8: is a diagram for explaining force applied to a clutch weight with which a conventional centrifugal clutch is provided.

Among others, the following reference signs are used in the figures:
- 1 :: motorcycle
- 3:: front wheel
- 4:: rear wheel
- 5:: handlebar
- 6:: front fork
- 7:: seat
- 8:: pivot shaft
- 20:: vehicle body frame
- 21:: head pipe
- 22:: upper tube
- 23:: under tube
- 24:: seat rail
- 25:: vertical tube
- 26:: stay
- 27:: pivot supporting part
- 28:: gusset
- 30:: engine unit
- 31:: engine
- 32:: crankshaft
- 33:: crankcase
- 34:: cylinder block
- 35:: cylinder head
- 40:: transmission unit
- 41:: transmission
- 42:: driving pulley
- 43:: driven pulley
- 44:: belt
- 46:: collar
- 50:: centrifugal clutch
- 51:: clutch inner
- 52:: plate
- 53, 53A: clutch weight
- 53e:: centroid displacement part
- 53f:: weight main body
- 53h:: recessed part
- 54:: weight supporting shaft
- 55:: spring
- 56:: bolt
- 57:: collar
- 58:: clutch outer
- 59:: driven shaft (central shaft)
- 61,62:: bearing
- 64:: holding ring
- 65:: stop ring

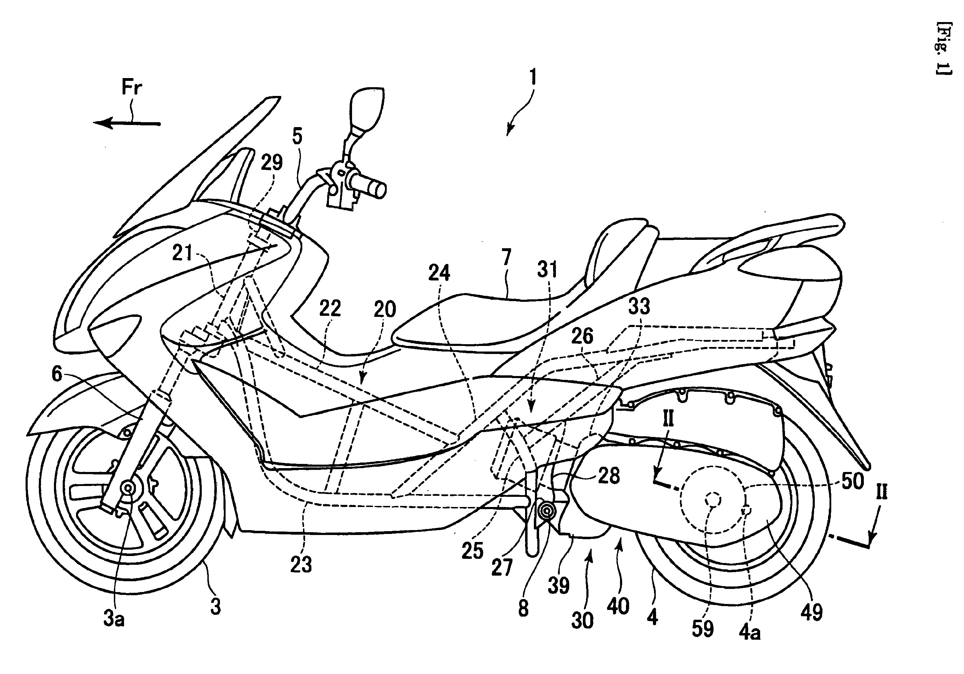

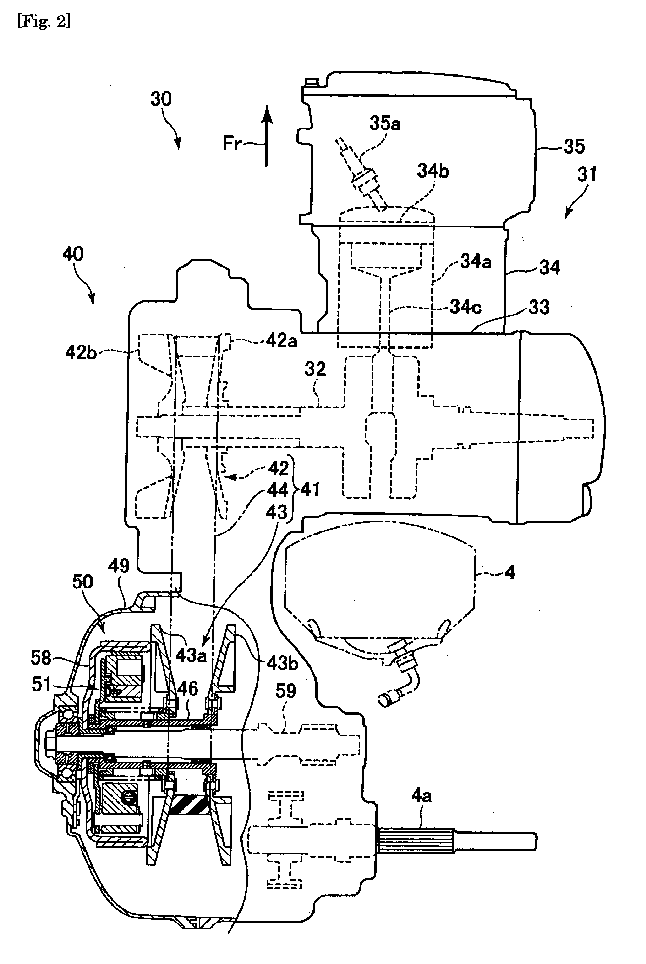

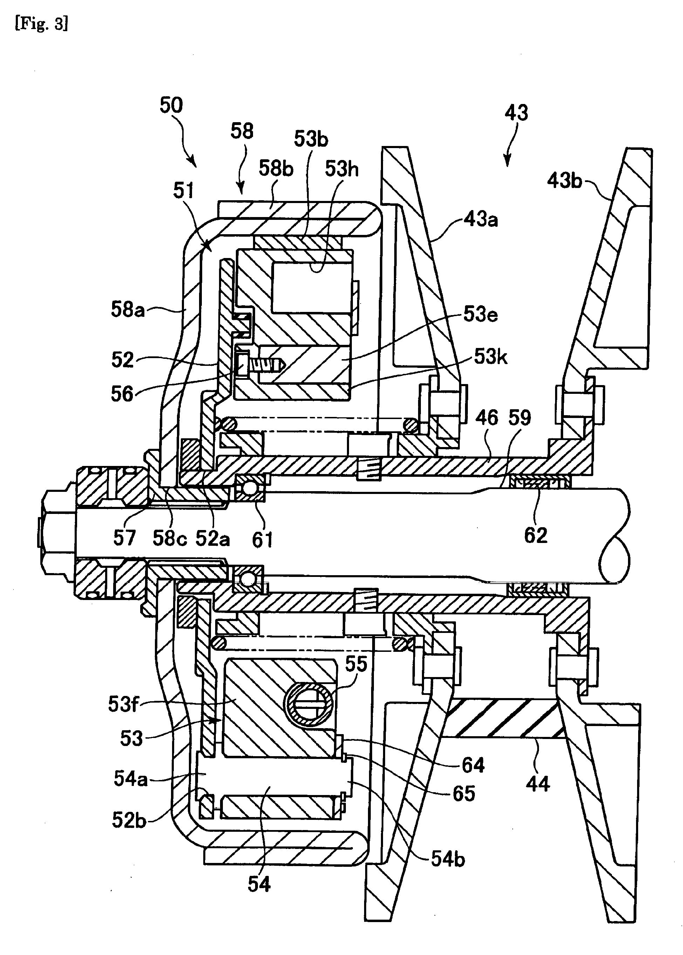

Hereinafter, an embodiment will be described with reference to the drawings. Fig. 1 is a side view of a motorcycle 1 provided with a clutch 50 as an example of the embodiment. Fig. 2 is a partial sectional view of an engine unit 30 along line II-II shown in Fig. 1. Fig. 3 is an enlarged view of Fig. 2.

Preferably, an engine unit has a centrifugal clutch. A vehicle, such as a straddle-type vehicle, has the engine unit. Herein, the straddle-type vehicle is, for example, a motorcycle (including a motor scooter), a snowmobile, and a four-wheeled buggy or the like. In general, a straddle-type vehicle has a body-frame and a seat on which a rider can be seated straddling the body frame when being seated.

As shown in Fig. 1, the motorcycle 1 is provided with a front wheel 3, a rear wheel 4 and a vehicle body frame 20 in addition to the engine unit 30. As shown in Fig. 2, the engine unit 30 is provided with an engine 31 generating torque, and a transmission unit 40 transmitting the torque to the rear wheel 4 and rotating the rear wheel 4. The transmission unit 40 includes a transmission 41 and the centrifugal clutch 50, which are housed in a case 49.

As shown in Fig. 1, the front wheel 3, which is arranged at the front of a vehicle body, is provided so as to rotate to the left and right centering on a steering shaft 29 according to the operation of a handlebar 5. Specifically, the steering shaft 29, which is inserted into a head pipe 21 provided at the front end of the vehicle body frame 20, is rotatably supported by the head pipe 21. The steering shaft 29 has an upper end to which the handlebar 5 is coupled and a lower end to which a front suspension 6 is coupled. The front wheel 3 has an axle 3a supported by the lower end of the front suspension 6, and thereby the front wheel 3 rotates to the left and right with the handlebar 5 and the front suspension 6.

The rear wheel 4 is arranged below a seat 7 on the rear of the vehicle body. The motorcycle 1 is a unit swing type vehicle. The rear wheel 4 is provided so as to enable the rear wheel 4 to move vertically to the vehicle body frame 20 with the engine unit 30. Specifically, the rear wheel 4 has an axle 4a of which one side is arranged in the case 49, the axle 4a rotatably supported by the case 49 (see Fig. 2). On the other hand, the engine unit 30 can be vertically moved centering on a pivot shaft 8 supported by the vehicle body frame 20, and thereby the rear wheel 4 and the engine unit 30 can be integrally and vertically moved to the vehicle body frame 20.

The vehicle body frame 20 is provided with a vertical tube 25 vertically extending below the seat 7, and a stay 26 extending slantingly upward and toward the rear of the vehicle body from a position on the way of the vertical tube 25. Therebetween, a vertically long gusset 28 is provided. The vehicle body frame 20 has a pivot supporting part 27 into which the pivot shaft 8 is inserted and which supports the pivot shaft 8. The pivot supporting part 27 is held by the lower part of the gusset 28.

The engine unit 30 has a supported part 39, which is attached to the pivot shaft 8. Specifically, the engine 31 of the engine unit 30 has a crankcase 33 housing a crankshaft 32 (see Fig. 2). The supported part 39 is provided so as to project forward from the underside of the crankcase 33. The supported part 39 has a cylindrically formed tip, into which the pivot shaft 8 is inserted. Thereby, the engine unit 30 can be vertically moved centering on the pivot shaft 8.

The vehicle body frame 20 is provided with an upper tube 22 and an under tube 23 in addition to the head pipe 21 or the like. The front end of the upper tube 22 and the upper end (front end) of the under tube 23 are connected to the head pipe 21. The upper tube 22, which extends toward the rear of the vehicle body and is provided so as to be downwardly inclined, has a rear end connected to a seat rail 24. The under tube 23, which is located below the upper tube 22, extends downward from the head pipe 21 and then bends backward. Then, the under tube 23 further extends rearward and has a rear end connected to the vertical tube 25.

As shown in Fig. 2, the engine unit 30 is provided with the engine 31. The engine 31 has a cylinder block 34 in which a cylinder 34a is formed, and a cylinder head 35 in which a spark plug 35a is provided, in addition to the crankcase 33 described above. A piston 34b is arranged in the cylinder 34a, and the piston 34b is coupled to the crankshaft 32 via a connecting rod 34c. The reciprocating movement of the piston 34b is converted into a rotating movement by the crankshaft 32, and the rotating movement is output to the downstream side (herein, the transmission 41 or the like) of a torque transmission path. The rotating speed of the crankshaft 32 fluctuates according to the engine stroke (intake stroke and combustion stroke or the like) and the operational state of the engine 31.

The transmission 41 is provided on one side (in the example of Fig. 2, on the left relative to a traveling direction (a direction shown by Fr)) of the crankshaft 32. In the example of Fig. 2, the transmission 41, which is a continuously variable transmission, is provided with a driving pulley 42, a driven pulley 43, and a belt 44 applied over the driving pulley 42 and the driven pulley 43 and transmitting the rotation of the driving pulley 42 to the driven pulley 43. The driving pulley 42, which is provided on the crankshaft 32, interlocks with the crankshaft 32. A driven shaft (central shaft) 59 is arranged to the rear of the crankshaft 32. The driven pulley 43, which is arranged on the driven shaft 59, is provided so as to be able to idle to the driven shaft 59. Specifically, bearings 61, 62 are fitted to the driven shaft 59, and a cylindrical collar 46 is fitted to the exteriors of the bearings 61, 62 (see Fig. 3). The driven pulley 43 is fitted to the exterior of the collar 46.

The driving pulley 42 includes a movable sheave 42a of which the movement in the axial direction of the crankshaft 32 is allowed and a fixed sheave 42b of which the movement in the axial direction is regulated, and the front side of the belt 44 is arranged therebetween. The driven pulley 43 includes a movable sheave 43a of which the movement in the axial direction of the driven shaft 59 is allowed and a fixed sheave 43b of which the movement in the axial direction is regulated, and the rear side of the belt 44 is arranged therebetween.

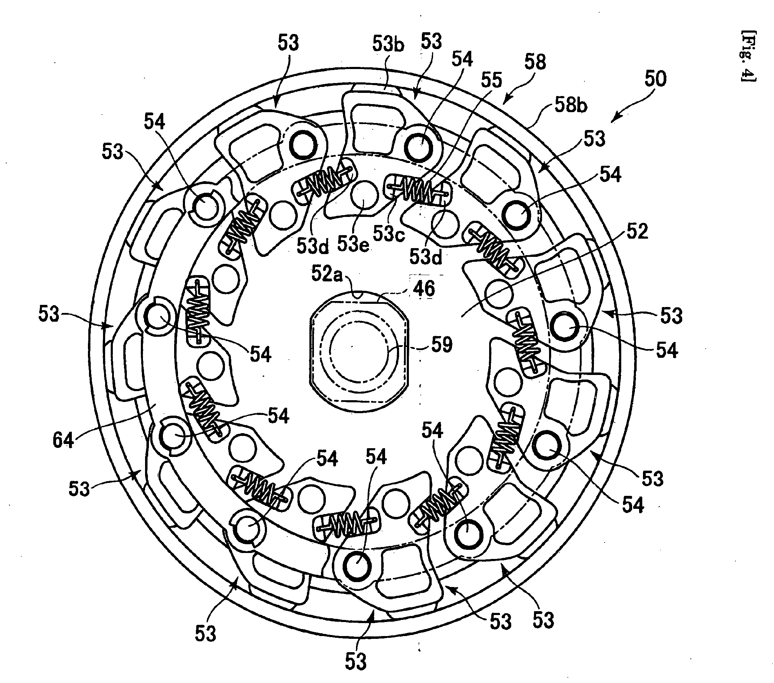

The centrifugal clutch 50 includes a clutch outer 58 and a clutch inner 51 provided so as to be relatively rotatable to the clutch outer 58. Fig. 4 is a front view of the centrifugal clutch 50.

The clutch outer 58 is provided on the outer side of the clutch inner 51 so as to surround the clutch inner 51. Specifically, as shown in Fig. 3, the clutch outer 58 has a disk-shaped plate part 58a and a cylindrical tube part 58b rising in the axial direction from the circumferential edge of the plate part 58a. The tube part 58b surrounds the clutch inner 51.

The clutch inner 51 is provided so as to be rotatable around the driven shaft 59. In example of Figs. 3, 4, the clutch inner 51 includes a disk-shaped plate 52 having a hole 52a formed in the center of the plate 52, and the collar 46 is fitted to the hole 52a. The hole 52a and the outer shape of the collar 46 on a position corresponding to the hole 52a are formed so that the collar 46 and the plate 52 integrally rotate (see Fig. 4). As described above, the collar 46 and the driven shaft 59 can idle. Thereby, the clutch inner 51 is provided so as to be able to idle to the driven shaft 59 around the driven shaft 59.

The clutch outer 58 and the driven shaft 59 are provided so as to integrally rotate. Specifically, as shown in Fig. 3, a hole 58c is formed in the center of the plate part 58a of the clutch outer 58. A cylindrical collar 57 integrally rotating with the plate part 58a is fitted to the hole 58c, and the driven shaft 59 is fitted to the interior of the collar 57. A spline is formed in the internal circumferential surface of the collar 57. The spline is engaged with a spline formed in the external circumferential surface of the driven shaft 59. Thereby, the clutch outer 58 and the driven shaft 59 integrally rotate.

As shown in Fig. 4, the clutch inner 51 is provided with a plurality of (herein, eleven) clutch weights 53 and weight supporting shafts 54 in addition to the plate 52.

The plurality of weight supporting shafts 54 are arranged so as to surround the driven shaft 59 on positions separated from the driven shaft 59 in the radial direction thereof. Each of the weight supporting shafts 54 has a first end 54a supported by the plate 52.

That is, holes 52b are formed on the external circumferential side of the plate 52, and the first end 54a is fitted to the hole 52b.

The plurality of clutch weights 53 are also arranged so as to surround the driven shaft 59. Each of the clutch weights 53, which is supported by the weight supporting shaft 54, provided so as to be movable to the clutch outer 58 side centering on the weight supporting shaft 54. That is, a hole penetrating the clutch weight 53 in the axial direction is formed in the clutch weight 53, and the weight supporting shaft 54 is inserted into the hole.

A plate-like friction material 53b is provided on the external circumferential surface of the clutch weight 53. When the rotation of the clutch inner 51 moves the clutch weight 53 to the radial direction of the driven shaft 59 centering on the weight supporting shaft 54, the friction material 53b is pressed against the internal circumferential surface of the tube part 58b. The torque of the clutch inner 51 is transmitted to the clutch outer 58 by frictional force generated therebetween. As shown in Fig. 2, the axle 4a of the rear wheel 4 is located to the rear of the driven shaft 59. The driven shaft 59 is rotated by the torque (hereinafter, referred to as clutch-transmission torque) transmitted to the clutch outer 58 from the clutch inner 51. The rotation is transmitted to the axle 4a of the rear wheel 4 via an intermediate shaft which is not shown.

The clutch weight 53 is pulled by a spring 55 in the direction where the friction material 53b separates from the clutch outer 58. Specifically, a spring attaching part 53c and a spring attaching part 53d are formed in the clutch weight 53. The spring 55 has a first end attached to the spring attaching part 53c and a second end attached to the spring attaching part 53d of the adjacent clutch weight 53. The spring attaching part 53c is located on the opposite side from the friction material 53b with the weight supporting shaft 54 interposed therebetween. The spring 55 pulls the spring attaching part 53c in the direction where the friction material 53b separates from the internal circumferential surface of the clutch outer 58.

In the example of Fig. 4, the spring 55 is provided so that the force of the spring 55 pulling the spring attaching part 53d is generally coincident with the radial direction of the weight supporting shaft 54. The generation of moment around the weight supporting shaft 54 is suppressed by the force of the spring 55 pulling the spring attaching part 53d.

A circular holding ring 64, which is fitted to second ends 54b of the plurality of weight supporting shafts 54, holds the second ends 54b (see Figs. 3 or 4). This holding ring 64 regulates the movement of the weight supporting shaft 54 in the radial direction. A stop ring 65 for preventing loss of the holding ring 64 is fitted to the second end 54b (see Fig. 3). In Fig. 4, only a part of the holding ring 64 is shown by a solid line, and the other part is shown by a two-dot chain line.

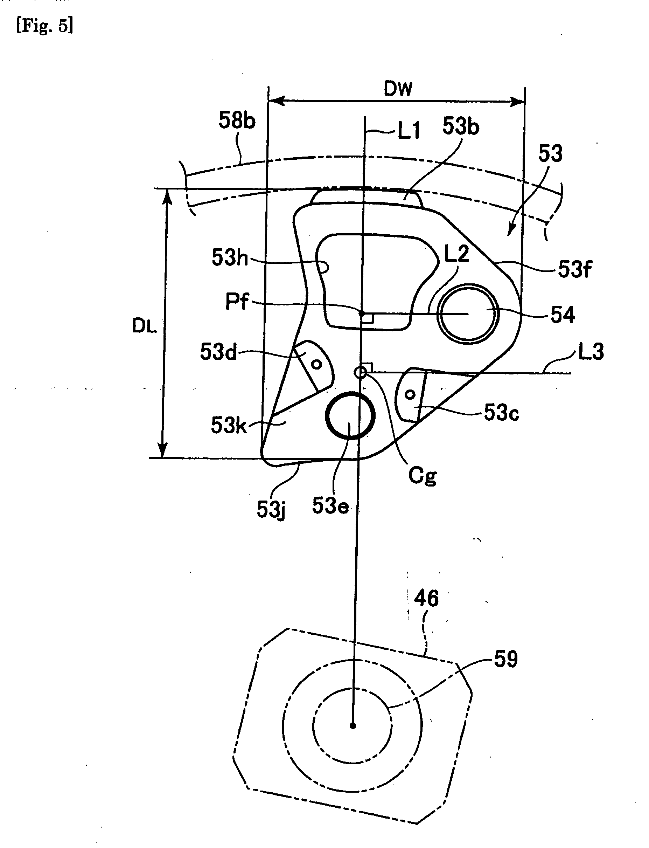

Herein, the clutch weight 53 will be specifically described. Fig. 5 is a front view of the clutch weight 53.

The clutch weight 53 has at its part a centroid displacement part 53e formed of a material different from the other part of the clutch weight 53. This centroid displacement part 53e draws a centroid position Cg of the clutch weight 53 to the driven shaft 59 side. That is, the centroid position Cg of the clutch weight 53 having the centroid displacement part 53e is closer to the driven shaft 59 as compared with the centroid position of the clutch weight having no centroid displacement part 53e.

The centroid displacement part 53e is formed of a material having a specific gravity larger than that of the other part of the clutch weight 53. That is, the clutch weight 53 has a weight main body 53f formed of a material (for example, aluminum and zinc alloy). The centroid displacement part 53e is formed of a material having a specific gravity larger than that of the weight main body 53f.

The centroid displacement part 53e is located on further the driven shaft 59 side than the weight supporting shaft 54. That is, the distance between the driven shaft 59 and the centroid displacement part 53e is shorter than the distance between the driven shaft 59 and the weight supporting shaft 54. In the example described herein, a hole is formed on the position on the driven shaft 59 side than the weight supporting shaft 54 in the weight main body 53f, and the centroid displacement part 53e is fitted to this hole (see Fig. 3).

The weight main body 53f has an extension part 53k extending to the driven shaft 59 side from the position where the weight supporting shaft 54 is provided. The length DL of the weight main body 53f in the radial direction of the driven shaft 59 is longer than the width Dw of the weight main body 53f in the circumferential direction of the driven shaft 59. The hole to which the centroid displacement part 53e is fitted is formed in the extension part 53k.

The centroid displacement part 53e is fixed to the weight main body 53f. For example, as shown in Fig. 3, the centroid displacement part 53e is fixed to the weight main body 53f by a bolt 56 fitted from the rear side of the hole to which the centroid displacement part 53e is fitted.

A recessed part 53h is formed in the weight main body 53f, the recessed part 53h reducing the weight of the external circumferential side of the weight main body 53f and drawing the centroid position Cg of the clutch weight 53 to the driven shaft 59 side (see Fig. 3). In the example of Fig. 5, the recessed part 53h is located on the outer side in the radial direction of the centroid displacement part 53e. In place of the recessed part 53h, a hole reducing the weight of the external circumferential side of the weight main body 53f may be formed in the weight main body 53f.

The centroid position Cg of the clutch weight 53 is located on further the driven shaft 59 side than an intersection point Pf of a straight line L1 and a perpendicular line L2. The straight line L1 of the radial direction of the driven shaft 59 passes through the centroid position Cg, and the perpendicular line L2 is perpendicular to the straight line L1 and passes through the center of the weight supporting shaft 54. That is, the weight supporting shaft 54 is located on further the external circumferential side than another straight line L3 passing through the centroid position Cg and being perpendicular to the straight line L1. The sizes and positions of the recessed part 53h and centroid displacement part 53e are selected so that the centroid position Cg is located on further the driven shaft 59 side than the intersection point Pf of the perpendicular line L2 and straight line L1.

The centrifugal clutch 50 described above is provided with the clutch inner 51 provided so as to be rotatable around the driven shaft 59 and the clutch outer 58 provided so as to be relatively rotatable to the clutch inner 51 on the outer side of the clutch inner 51. The clutch inner 51 is provided with the weight supporting shafts 54 and the clutch weights 53 supported by the weight supporting shafts 54 so that the clutch weights 53 can be moved to the clutch outer 58 side centering on the weight supporting shafts 54. The centroid position Cg of the clutch weight 53 is located on further the driven shaft 59 side than an intersection point Pf of a straight line L1 and a perpendicular line L2. The straight line L1 of the radial direction of the driven shaft 59 passes through the centroid position Cg, and the perpendicular line L2 is perpendicular to the straight line L1 and passes through the center of the weight supporting shaft 54.

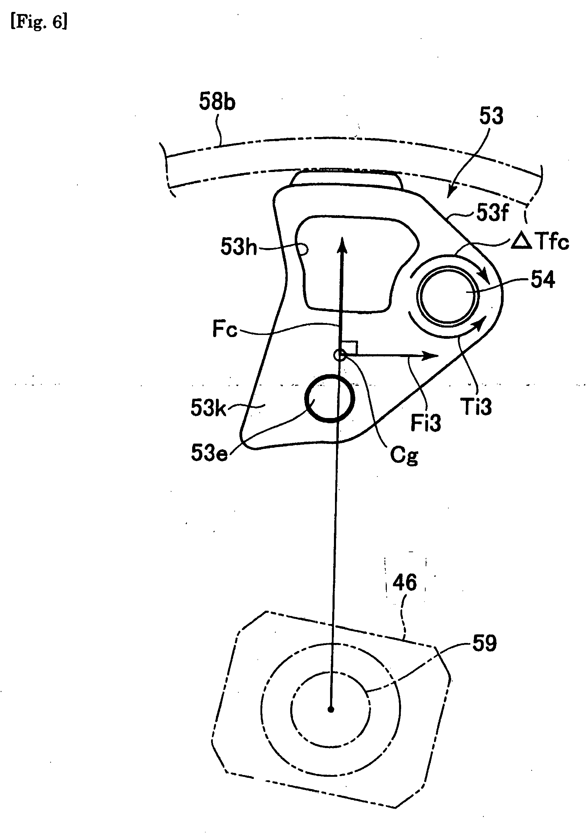

Thereby, the fluctuation in the clutch-transmission torque caused by the fluctuation in the rotating speed of the clutch inner 51 can be suppressed. Hereinafter, this suppression effect of torque fluctuation caused by the centrifugal clutch 50 will be described. Fig. 6 is a diagram for explaining force applied to the clutch weight 53. Fig. 6 shows the force applied to the clutch weight 53 as example when the rotating speed of the clutch inner 51 rises. When the rotating speed of the clutch inner 51 rises, centrifugal force Fc applied to the clutch weight 53 increases. On the other hand, inertial force Fi3 is generated in the direction perpendicular to the straight line L1, and thereby torque Ti3 centering on the weight supporting shaft 54 is generated. This torque Ti3 can act as force separating the clutch weight 53 from the clutch outer 51 to suppress the increase of the clutch connection force. That is, torque centering on the weight supporting shaft 54 is also generated by the centrifugal force Fc. When the centrifugal force Fc increases, the torque also increases. Since the centroid position Cg is located on further the driven shaft 59 side than the intersection point Pf, the direction of the increase amount ΔTfc of the torque caused by the centrifugal force Fc is opposite to that of the torque Ti3, and these torques are mutually canceled each other to suppress the increase of the clutch connection force.

When the rotating speed of the clutch inner 51 declines, the torque caused by the inertial force can act as force for pressing the clutch weight 53 against the clutch outer 58 to suppress the reduction of the clutch connection force. That is, the reduction amount of the torque centering on the weight supporting shaft 54 caused by the reduction of the centrifugal force Fc and the torque centering on the weight supporting shaft 54 caused by the inertial force are mutually canceled each other to suppress the reduction of the clutch connection force. Thus, since the fluctuation in the clutch connection force caused by the fluctuation in the rotating speed of the clutch inner 51 is suppressed, the fluctuation in the clutch-transmission torque is suppressed.

The clutch weights 53 has at its part the centroid displacement part 53e formed of the material different from the other part of the clutch weight 53 and drawing the centroid position Cg of the clutch weight 53 to the driven shaft 59 side.

Thereby, the fluctuation in the clutch-transmission torque caused by the fluctuation in the rotating speed of the clutch inner 51 can be suppressed. That is, although the inertial force Fi3 is generated in the clutch weight 53 when the rotating speed of the clutch inner 51 rises, the centroid position Cg of the clutch weight 53 is drawn to the driven shaft 59 side by the centroid displacement part 53e. Thereby, the torque Ti3 generated by the inertial force Fi3 is reduced as compared with the clutch having no centroid displacement part 53e. Therefore, the fluctuation in the clutch connection force caused by the fluctuation in the rotating speed of the clutch inner 51 is suppressed, and as a result, the fluctuation in the clutch-transmission torque is suppressed. As described above, the centroid position Cg of the clutch weight 53 is located on further the driven shaft 59 side than the intersection point Pf. Therefore, the torque Ti3 acts in the opposite direction to that of the torque (ΔTfc described above) generated by the increase and decrease of the centrifugal force Fc. When the direction of the torque caused by the increase and decrease of the centrifugal force Fc is defined as positive, the torque Ti3 is a negative value.

The present teaching, which is not limited to the centrifugal clutch 50 described above, can be variously changed. For example, in the above description, the centroid displacement part 53e is fitted to the hole formed in the weight main body 53f. However, for example, the centroid displacement part may be fixed to an internal circumferential surface 53j of the weight main body 53f (see Fig. 5).

In the above description, the centroid displacement part 53e, which is formed of the material having the specific gravity larger than that of the weight main body 53f, is provided on the internal circumferential side of the clutch weights 53. However, the centroid displacement part 53e may be formed of the material having the specific gravity lower than that of the weight main body 53f, and may be provided on the external circumferential side of the clutch weight 53 so that the centroid position Cg of the clutch weight 53 is drawn to the driven shaft 59 side.

In the centrifugal clutch 50, the centroid displacement part 53e is formed of the material different from that of the weight main body 53f, and furthermore, the centroid position Cg is located on further the driven shaft 59 side than the intersection point Pf of the perpendicular line L2 and straight line L1. However, the centroid position Cg may be located on further the driven shaft 59 side than the intersection point Pf by the centroid displacement part formed of the same material as that of the weight main body 53f. For example, the centroid displacement part may project in the axial direction of the driven shaft 59 from the weight main body 53f, or may be formed so as to project to the driven shaft 59 side.

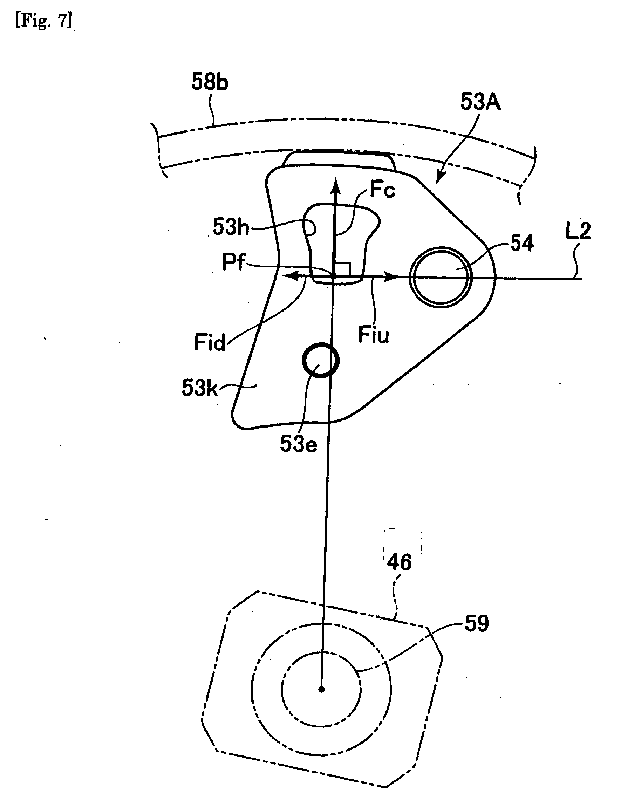

In the above description, the centroid position Cg is located on further the driven shaft 59 side than the intersection point Pf of the perpendicular line L2 and straight line L1. However, the centroid position Cg may be located at the intersection point Pf. Even in this case, the fluctuation in the clutch-transmission torque caused by the fluctuation in the rotating speed of the clutch inner 51 can be suppressed. Fig. 7 is a diagram for explaining force applied to a clutch weight 53A according to this embodiment. In Fig. 7, the same parts as those described above are designated by the same reference numerals. In the clutch weight 53A, the centroid of the clutch weight 53A is located at the intersection point Pf. In this case, the weight supporting shaft 54 is located on the action line of inertial force Fu or Fd caused by the fluctuation in the rotating speed of the clutch inner 51. Thereby, even when the rotating speed of the clutch inner 51 rises, the torque centering on the weight supporting shaft 54 is not generated by the inertial force Fu or Fd. Therefore, the fluctuation in the clutch-transmission torque caused by the fluctuation in the rotating speed of the clutch inner 51 can be suppressed.

In the centrifugal clutch 50, the centroid displacement part 53e is formed of the material different from that of the weight main body 53f, and furthermore, the centroid position Cg is located on further the driven shaft 59 side than the intersection point Pf. However, the centroid displacement part 53e is formed of the material different from that of the weight main body 53f; the centroid position Cg of the clutch weight 53 is drawn to the driven shaft 59 side; but the centroid position Cg may be still located on the external circumferential side than the intersection point Pf. Thereby, the fluctuation in the clutch-transmission torque caused by the fluctuation in the rotating speed of the clutch inner 51 can be suppressed as compared with the clutch having no centroid displacement part 53e.

The description above discloses (among others) an embodiment of a centrifugal clutch comprising: a clutch inner provided so as to be rotatable around a central shaft; and a clutch outer provided so as to be relatively rotatable to the clutch inner on the outer side of the clutch inner, wherein the clutch inner comprises: a weight supporting shaft; and a clutch weight supported by the weight supporting shaft so as to be movable to the clutch outer side centering on the weight supporting shaft, and a centroid position of the clutch weight is located at an intersection point of a straight line of a radial direction of the central shaft passing through the centroid position and a perpendicular line being perpendicular to the straight line and passing through the weight supporting shaft, or on further the central shaft side than the intersection point.

Preferably, the clutch weight has a centroid displacement part drawing the centroid position to the central shaft side.

Further, preferably the centroid displacement part is formed of a material different from that of other part of the clutch weight.

Further, preferably the centroid displacement part is formed of a material having a specific gravity larger than that of other part of the clutch weight.

The description above also discloses another embodiment of a centrifugal clutch comprising: a clutch inner provided so as to be rotatable around a central shaft; and a clutch outer provided so as to be relatively rotatable to the clutch inner on the outer side of the clutch inner, wherein the clutch inner comprises: a weight supporting shaft; and a clutch weight supported by the weight supporting shaft so as to be movable to the clutch outer side centering on the weight supporting shaft, and the clutch weight has at its part a centroid displacement part formed of a material different from that of other part of the clutch weight and drawing the centroid position of the clutch weight to the central shaft side.

The centrifugal clutch of said other embodiment can also suppress the fluctuation in the clutch-transmission torque caused by the fluctuation in the rotating speed of the clutch inner. That is, when the rotating speed of the clutch inner rises or declines, as described above, the inertial force is generated in the clutch weight. However, since the centroid position of the clutch weight is drawn to the central shaft side by the centroid displacement part in this centrifugal clutch, the torque (in the example of Fig. 8, the torque Ti1 and torque Ti2) generated by the inertial force can be reduced as compared with the centrifugal clutch having no centroid displacement part. Thereby, when the rotating speed of the clutch inner rises, the increase of the clutch connection force caused by the rise can be suppressed. When the rotating speed of the clutch inner declines, the reduction of the clutch connection force caused by the declination can be suppressed. As a result, the fluctuation in the clutch-transmission torque can be suppressed.

Preferably, said other embodiment can be combined with the previous embodiment.

Preferably, the centroid displacement part of the clutch weight is formed of a material having a specific gravity larger than that of other part of the clutch weight.

Preferably, an engine unit comprises the centrifugal clutch according to one of the preceding embodiments.

Preferably, a straddle-type vehicle comprises the engine unit according to the preceding embodiment.

In order to provide a centrifugal clutch capable of suppressing fluctuation in clutch-transmission torque caused by fluctuation in rotating speed of a clutch inner, an embodiment of a centrifugal clutch is provided with a clutch inner 51 provided so as to be rotatable around a driven shaft 59 and a clutch outer 58 provided so as to be relatively rotatable to the clutch inner. The clutch inner 51 is provided with a weight supporting shaft 54 located on a position separating from the driven shaft, and a clutch weight 53 supported by the weight supporting shaft 54 so that the clutch weight 53 can move to a clutch outer 58 side centering on the weight supporting shaft 54. The centroid position Cg of the clutch weight 53 is located on further the driven shaft 59 side than an intersection point Pf of a straight line L1 and a perpendicular line L2. The straight line L1 of the radial direction of the driven shaft 59 passes through the centroid position Cg, and the perpendicular line L2 is perpendicular to the straight line L1 and passes through the center of the weight supporting shaft 54.

## Claims

1. Centrifugal clutch comprising:
a clutch inner (51) being rotatable around a central shaft (59) of the centrifugal clutch (50); and
a clutch outer (58) being relatively rotatable to the clutch inner (51) on an outer side of the clutch inner (51), the clutch inner (51) comprising:
a weight supporting shaft (54); and
a clutch weight (53,53A) supported by the weight supporting shaft (54) and configured to move towards the clutch outer (58) under influence of a centrifugal force (Fc), wherein a centroid position (Cg) of the clutch weight (53,53A) is located at an intersection point (Pf) of a straight line (L1), which passes through the central shaft (59) and the centroid position (Cg) in radial direction of the centrifugal clutch (50), and a perpendicular line (L2), which is perpendicular to the straight line (L1) and passes through the weight supporting shaft (54), or is located between the intersection point (Pf) and the central shaft (59), wherein the clutch weight (53,53A) comprises a weight main body (53f), **characterized in that** a length (DL) of the weight main body (53f) in radial direction of the centrifugal clutch (50) is longer than a width (DW) of the weight main body (53f) in circumferential direction of the centrifugal clutch (50).

2. Centrifugal clutch according to claim 1, **characterized in that** a centroid displacement part (53e) is configured to displace the centroid position (Cg) of the clutch weight (53,53A) towards the central shaft (59).

3. Centrifugal clutch according to claim 2, **characterized in that** the centroid displacement part (53e) is connected to the clutch weight (53,53A).

4. Centrifugal clutch according to claim 2 or 3, **characterized in that** the centroid displacement part (53e) is formed of a material different from that that of the clutch weight (53,53A).

5. Centrifugal clutch according to claim 4, **characterized in that** the centroid displacement part (53e) is formed of a material having a specific gravity larger than that of the clutch weight (53,53A).

6. Centrifugal clutch according to one of claims 2 to 5, **characterized in that** a distance between the central shaft (59) and the centroid displacement part (53e) is shorter than a distance between the central shaft (59) and the weight supporting shaft (54).

7. Centrifugal clutch according to one of claims 1 to 6, **characterized in that** an extension part (53k) extends from the weight main body (53f) towards the central shaft (59).

8. Centrifugal clutch according to claim 7, **characterized in that** the centroid displacement part (53e) is connected to the extension part (53k) and is, preferably, fitted into a hole formed in the extension part (53k).

9. Centrifugal clutch according to one of claims 2 to 8, **characterized in that** the centroid displacement part (53e) is provided on an external circumferential side of the clutch weight (53,53A) and, preferably, is formed of a material having a specific gravity lower than that of the clutch weight (53,53A).

10. Centrifugal clutch according to one of claims 1 to 10, **characterized in that** a recessed part (53h) and/or a hole is formed in an outer area of the clutch weight (53,53A).

11. Engine unit comprising a centrifugal clutch according to one of claims 1 to 10.

12. Vehicle, in particular a straddle-type vehicle, comprising an engine unit according to claim 11.

## Patentansprüche

1. Zentrifugalkupplung mit:
einem Kupplungs-Innenteil (51), das drehbar um eine Zentralwelle (59) der Zentrifugalkupplung (50) ist; und
einem Kupplungs-Außenteil, das relativ drehbar zu dem Kupplungs-Innenteil (51) an der äußeren Seite des Kupplungs-Innenteils (51) ist, das Kupplungs-Innenteil (51) umfasst:
ein Kupplungs-Gewicht (53, 53A) gelagert durch eine Gewichts-Lagerwelle (54) und konfiguriert zum Bewegen zu dem Kupplungs-Außenteil 58 unter Einfluss einer Zentrifugalkraft (Fc), wobei eine Schwerpunktposition (Cg) des Kupplungs-Gewichts (53, 53A) an einem Schnittpunkt (Pf) einer geraden Linie (L1), die sich durch die Zentralwelle (59) und der Schwerpunktposition (Cg) in radialer Richtung der Zentrifugalkupplung (50) erstreckt, und einer senkrechten Linie (L2), die senkrecht zu der geraden Linie (L1) ist und sich durch die Gewichts-Lagerwelle (54) erstreckt, angeordnet ist, oder zwischen dem Schnittpunkt (Pf) und der Zentralewelle (59) angeordnet ist, wobei das Kupplungs-Gewicht (53, 53A) einen Gewichtshauptkörper (53f) aufweist, **dadurch gekennzeichnet, dass** eine Länge (DL) des Gewichtshauptkörpers (53f) in radialer Richtung der Zentrifugalkupplung (50) länger ist als eine breite (DW) des Gewichtshauptkörpers (53f) in Umfangsrichtung der Zentrifugalkupplung (50).

2. Zentrifugalkupplung gemäß Anspruch 1, **dadurch gekennzeichnet, dass** ein Schwerpunkt-Verschiebeteil (53e) zum Verschieben der Schwerpunktposition (Cg) des Kupplungs-Gewichts (53, 53A) zu der Zentralwelle (59) konfiguriert ist.

3. Zentrifugalkupplung gemäß Anspruch 2, **dadurch gekennzeichnet, dass** der Schwerpunkt-Verschiebeteil (53e) mit dem Kupplungs-Gewicht (53, 53A) verbunden ist.

4. Zentrifugalkupplung gemäß Anspruch 2 oder 3, **dadurch gekennzeichnet, dass** der Schwerpunkt-Verschiebeteil (53e) aus einem Material, unterschiedlich von dem des Kupplungs-Gewichts (53, 53A) gebildet ist.

5. Zentrifugalkupplung gemäß Anspruch 4, **dadurch gekennzeichnet, dass** der Schwerpunkt-Verschiebeteil (53e) aus einem Material mit einem spezifischen Gewicht größer als das des Kupplungs-Gewichts (53, 53a) gebildet ist.

6. Zentrifugalkupplung gemäß einem der Ansprüche 2 bis 5, **dadurch gekennzeichnet, dass** ein Abstand zwischen der Zentralwelle (59) und dem Schwerpunkt-Verschiebeteil (53e) kürzer ist als ein Abstand zwischen der Zentralwelle (59) und der Gewichts-Lagerwelle (54).

7. Zentrifugalkupplung gemäß einem der Ansprüche 1 bis 6, **dadurch gekennzeichnet, dass** ein Erweiterungsteil (53k) sich von dem Gewichtshauptkörper (53f) zu der Zentralwelle (59) erstreckt.

8. Zentrifugalkupplung gemäß Anspruch 7, **dadurch gekennzeichnet, dass** der Schwerpunkt-Verschiebeteil (53e) mit dem Erweiterungsteil (53k) verbunden ist und bevorzugt in einem Loch, ausgebildet in dem Erweiterungsteil (53k), eingesetzt ist.

9. Zentrifugalkupplung gemäß einem der Ansprüche 2 bis 8, **dadurch gekennzeichnet, dass** der Schwerpunkt-Verschiebeteil (53e) an einer externen Umfangsseite des Kupplungs-Gewichts (53, 53A) vorgesehen ist, und bevorzugt aus einem Material mit einem spezifischen Gewicht geringer als das des Kupplungs-Gewichts (53, 53A) gebildet ist.

10. Zentrifugalkupplung gemäß einem der Ansprüche 1 bis 10, **dadurch gekennzeichnet, dass** ein ausgesparter Teil (53h) und/oder ein Loch in einem äußeren Bereich des Kupplungs-Gewichts (53, 53A) gebildet ist.

11. Motor-Einheit mit einer Zentrifugalkupplung gemäß einem der Ansprüche 1 bis 10.

12. Fahrzeug, insbesondere ein Fahrzeug vom Spreiz-Sitz-Typ mit einer Motor-Einheit gemäß Anspruch 11.

## Revendications

1. Embrayage centrifuge comprenant :
une partie interne de l'embrayage (51) pouvant tourner autour d'un arbre central (59) de l'embrayage centrifuge (50), et
une partie externe de l'embrayage (58) pouvant relativement tourner vers la partie interne de l'embrayage (51) sur le côté externe d'une partie interne de l'embrayage (51), la partie interne de l'embrayage (51) comprenant :
un arbre (54) supportant une masse, et
une masse d'embrayage (53, 53A) supportée par l'arbre (54) qui supporte la masse et configurée pour se déplacer vers la partie externe de l'embrayage (58) sous l'influence d'une force centrifuge (Fc), la position du centre de gravité (Cg) de la masse de l'embrayage (53, 53A) étant située au niveau d'un point d'intersection (Pf) d'une droite (L1) qui traverse l'arbre central (59) et la position du centre de gravité (Cg) dans la direction radiale de l'embrayage centrifuge (50) et d'une droite perpendiculaire (L2) à la droite (L1) et traverse l'arbre (54) supportant la masse, ou bien elle est située entre le point d'intersection (Pf) et l'arbre central (59), dans lequel la masse de l'embrayage (53, 53A) comprend un corps principal de masse (53f), **caractérisé en ce que** la longueur (DL) du corps principal de la masse (53f) dans la direction radiale de l'embrayage centrifuge (50) est plus importante que la largeur (DW) du corps principal de la masse (53f) dans la direction circonférentielle de l'embrayage centrifuge (50).

2. Embrayage centrifuge selon la revendication 1, **caractérisé en ce qu'**une pièce de déplacement du centre de gravité (53e) est configurée pour déplacer la position du centre de gravité (Cg) de la masse de l'embrayage (53, 53A) vers l'arbre central (59).

3. Embrayage centrifuge selon la revendication 2, **caractérisé en ce que** la pièce de déplacement du centre de gravité (53e) est reliée à la masse de l'embrayage (53, 53A).

4. Embrayage centrifuge selon la revendication 2 ou 3, **caractérisé en ce que** la pièce de déplacement du centre de gravité (53e) est formée d'un matériau différent de celui de la masse de l'embrayage (53, 53A).

5. Embrayage centrifuge selon la revendication 4, **caractérisé en ce que** la pièce de déplacement du centre de gravité (53e) est formée d'un matériau présentant une densité plus importante que celle de la masse de l'embrayage (53, 53A).

6. Embrayage centrifuge selon l'une des revendications 2 à 5, **caractérisé en ce que** la distance entre l'arbre central (59) et la pièce de déplacement du centre de gravité (53e) est plus courte que la distance entre l'arbre central (59) et l'arbre supportant la masse (54).

7. Embrayage centrifuge selon l'une des revendications 1 à 6, **caractérisé en ce qu'**une pièce d'extension (53k) s'étend depuis le corps principal de la masse (53f) vers l'arbre central (59).

8. Embrayage centrifuge selon la revendication 7, **caractérisé en ce que** la pièce de déplacement du centre de gravité (53e) est reliée à la pièce d'extension (53k) et qu'elle est, de préférence, adaptée dans un alésage formé dans la pièce d'extension (53k).

9. Embrayage centrifuge selon l'une des revendications 2 à 8, **caractérisé en ce que** la pièce de déplacement du centre de gravité (53e) est prévue sur le côté circonférentiel externe de la masse de l'embrayage (53, 53A) et, de préférence, qu'elle est formée d'un matériau présentant une densité inférieure à celle la masse de l'embrayage (53, 53A).

10. Embrayage centrifuge selon l'une des revendications 1 à 10, **caractérisé en ce qu'**une pièce en retrait (53h) et/ou qu'un alésage est formé dans la surface externe de la masse de l'embrayage (53, 53A).

11. Unité de moteur thermique comprenant un embrayage centrifuge conforme à l'une des revendications 1 à 10.

12. véhicule, en particulier un véhicule à selle, comprenant une unité de moteur thermique conforme à la revendication 11.
